Europäisches Patentamt

European Patent Office

Office européen des brevets

(19)

(11) Numéro de publication: **0 218 503**
**B1**

(12) **FASCICULE DE BREVET EUROPÉEN**

(45) Date de publication du fascicule du brevet:
21.03.90

(21) Numéro de dépôt: 86401979.9

(22) Date de dépôt: 10.09.86

(51) Int. Cl.⁵: **B 60 B   3/04,** B 60 B 21/02,
**B 21 D  53/30**

(54) Roue de véhicule et son procédé de fabrication.

(30) Priorité: 13.09.85 FR 8514150

(43) Date de publication de la demande:
15.04.87 Bulletin 87/16

(45) Mention de la délivrance du brevet:
21.03.90 Bulletin 90/12

(84) Etats contractants désignés:
DE GB IT

(56) Documents cité:
BE-A-419 495
US-A-1 718 874

(73) Titulaire: AUTOMOBILES PEUGEOT
75, avenue de la Grande Armée
F-75116 Paris (FR)
Titulaire: AUTOMOBILES CITROEN
62 Boulevard Victor-Hugo
F-92200 Neuilly-sur-Seine (FR)

(72) Inventeur: Quinet, Jean-Claude
2, rue de Chateaubourg
F-91370 Verrieres-Le-Buisson (FR)

(74) Mandataire: Boivin, Claude
9, rue Edouard-Charton
F-78000 Versailles (FR)

LIBERGRAF, STOCKHOLM 1990

## Description

La présente invention est relative aux roues de véhicules automobiles et leur procédé de fabrication, de préférence, en tôle et composées d'un voile de roue et d'une jante soudée sur le voile de roue.

Les flancs des roues des véhicules automobiles comportent généralement des enjoliveurs qui recouvrent le voile de la roue ou une partie de celui-ci et qui sont réalisés en alliage léger, en acier inoxydable, ou en matière plastique, en étant extérieurement polis et/ou décorés. Ces enjoliveurs sont fixés soit au voile par leur centre, soit au bord de la jante par leur périphérie.

Très souvent, ces enjoliveurs empêchent d'avoir accès aux points de fixation de la roue sur le moyeu. Il est alors nécessaire de déposer l'enjoliveur avant de retirer la roue, cette dépose et la remise en place ultérieure de l'enjoliveur sont une perte de temps ainsi qu'un risque de perte ou de détérioration de l'enjoliveur.

Pour pallier cet inconvénient, les enjoliveurs sont de plus en plus fréquemment munis, au droit des points de fixation des roues, de perforations permettant le passage d'un outil sans avoir à déposer l'enjoliveur. Mais celui-ci est cependant monté de manière amovible par rapport à la roue et son montage augmente notablement les frais de fabrication de la roue.

Le document BE-A-419 495 décrit une roue métallique dont la jante est prolongée par des bras qui sont rabattus vers l'intérieur de la roue et participent à la résistance de celle-ci.

L'invention concerne une roue perfectionnée pour véhicule automobile, dont la construction est simplifiée.

Cette roue est caractérisée en ce que sa jante comporte sur son bord extérieur un prolongement latéral destiné à être replié extérieurement vers le centre de la roue et soudé sur le voile de manière à constituer l'enjoliveur de roue.

Le procédé de fabrication de cette roue est caractérisé en ce que l'on effectue dans une tôle plate rectangulaire une série de découpes trapézoïdales, que dans un premier temps on déforme cette tôle, sur la partie opposée aux découpes, pour obtenir le profil de la jante, que dans un deuxième temps on la déforme pour obtenir le bord replié de la jante et pour plier vers le centre de la roue le prolongement, et qu'après avoir roulé et soudé cette tôle pour former la jante à l'intérieur de laquelle on soude le voile de roue, le prolongement est mis en forme pour obtenir son profil définitif et soudé sur le voile de roue.

Selon un mode préféré d'éxécution, des motifs décoratifs tels que des stries ou des découpes de décoration sont réalisés simultanément aux découpes trapézoïdales.

On a décrit ci-après, à titre d'exemple non limitatif, un mode de réalisation de la roue selon l'invention et du mode de mise en oeuvre du procédé permettant de la réaliser, avec référence aux dessins annexés dans lesquels:

La Figure 1 montre une vue partielle en élévation de la roue;

La Figure 2 est une demi-coupe suivant II - II de la Figure 1;

Les Figures 3 à 7 sont des vues en perspective montrant les diverses étapes du procédé.

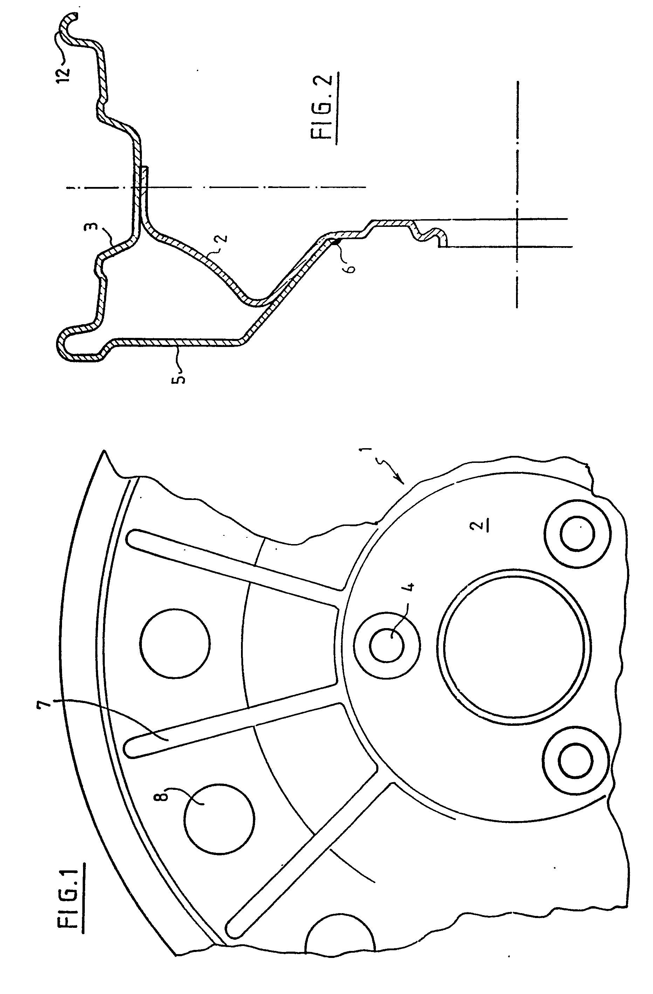

Telle qu'elle est représentée au dessin, la roue (Figures 1 et 2) comprend, soudée sur un voile 2 une jante 3. Le voile de roue 2 disposé du côté extérieur de la roue comporte des trous 4 pour le passage des boulons de fixation de cette roue sur son moyeu.

Le rebord extérieur de la jante comporte un prolongement 5 qui est replié vers le centre de la roue et soudé en 6 sur le voile de roue de manière à constituer l'enjoliveur. Le prolongement 5 présente des fentes 7 régulièrement réparties et également des éléments décoratifs, tels que des ouvertures 8. Ces éléments décoratifs, pourraient être également des stries ou des saignées dont l'effet visuel se substitue à celui de l'enjoliveur classique. On voit que l'accès aux boulons de fixation de la roue est parfaitement dégagé et qu'aucune manoeuvre préalable n'est nécessaire pour enlever la roue.

Le procédé de fabrication d'une telle roue est le suivant:

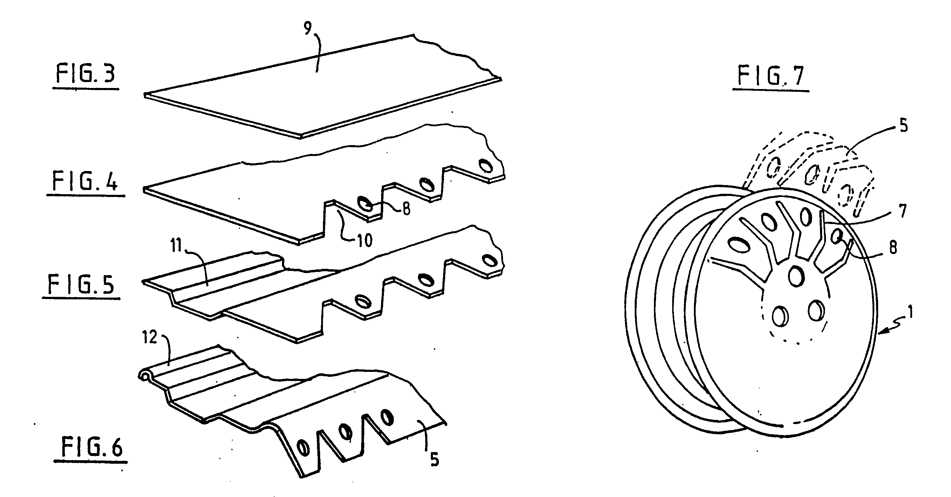

On dispose d'une plaque rectangulaire de tôle 9 plate (Figure 3), dans laquelle on effectue sur l'un de ses bords suivant la longueur des découpes 10 de forme trapézoïdale, de manière à obtenir les fentes 7 lorsque la roue sera mise en forme. On peut effectuer simultanément les éléments décoratifs tels que les trous 8, ou des stries ou des saignées (Figure 4).

On fait subir à cette plaque de tôle une première déformation (Figure 5) de manière à former la section 11 de la jante, puis une deuxième déformation (Figure 6) de manière à former le bord intérieur 12 de la jante et à replier le prolongement 5 vers l'intérieur. Cette plaque de tôle est ensuite roulée et soudée (Figure 7) de manière à former la jante 3 à l'intérieur de laquelle on soude le voile de roue 2. Le prolongement 5 dessiné en pointillé sur la Figure 7 est enfin déformé pour obtenir son profil définitif et soudé sur le voile de roue.

## Revendications

1. Roue de véhicules automobiles constituée d'un voile (2) de roue sur lequel est soudée une jante (3) de roue en tôle, caractérisée en ce que la jante (3) comporte sur son bord extérieur un prolongement latéral (5) destiné à être replié extérieurement vers le centre de la roue et soudé sur le voile (2) de manière à constituer l'enjoliveur de roue.

2. Procédé de fabrication d'une roue selon la revendication 1, caractérisé en ce que l'on effectue dans une plaque de tôle (9) plate rectangulaire sur l'un de ses bords une série de découpes trapézoïdales (10), que dans un premier temps on déforme cette tôle pour obtenir le profil (11) de la jante (3) et dans un deuxième temps on la déforme pour obtenir le bord intérieur replié (12) de la jante (3) et pour plier vers l'intérieur le prolongement (5) et que après avoir roulé cette tôle et l'avoir soudée pour former la jante sur laquelle on soude le voile de roue (2), le prolongement (5) est mis en forme pour obtenir son profil définitif et soudé sur le voile de roue (2).

3. Procédé de fabrication d'une roue selon la revendication 2, caractérisé en ce que des motifs décoratifs tels que des stries ou des découpes de décoration (8) sont réalisées simultanément aux découpes trapézoïdales (10).

**Patentansprüche**

1. Kraftfahrzeugrad mit einem Radkörper (2), auf den eine Radfelge (3) aus Blech aufgeschweißt ist, dadurch gekennzeichnet, daß die Felge (3) an ihrem äußeren Rand eine seitliche Verlängerung (5) aufweist, die dazu bestimmt ist, nach außen zur Radmitte hin umgebogen und mit dem Radkörper (2) derart verschweißt zu werden, daß sie die Zierkappe des Rades bildet.

2. Verfahren zur Herstellung eines Rades nach Anspruch 1, dadurch gekennzeichnet, daß man eine flache rechteckige Blechplatte (9) an einem ihrer Ränder mit einer Reihe von trapezförmigen Ausschnitten (10) versieht, daß man in einem ersten Zeitabschnitt dieses Blech verformt, um das Profil (11) der Felge (3) zu erzeugen und es in einem zweiten Zeitabschnitt verformt, um den umgefalzten inneren Rand der Felge (3) zu erzeugen und die Verlängerung (5) nach innen zu biegen und daß, nachdem dieses Blech rundgebogen und zur Bildung der Felge verschweißt ist, an welche man den Radkörper (2) anschweißt, die Verlängerung (5) derart geformt wird, daß sie ihr endgültiges Profil erhält und mit dem Radkörper (2) verschweißt wird.

3. Verfahren zur Herstellung eines Rades nach Anspruch 2, dadurch gekennzeichnet, daß gleichzeitig mit den trapezförmigen Ausschnitten (10) Ziermuster, wie Rillen oder Zierausschnitte (8), erzeugt werden.

**Claims**

1. Motor vehicle wheel formed of a wheel disc (2) to which is welded a metal sheet wheel rim (3), characterized in that the rim (3) comprises on its external edge a lateral extension (5) intended to be bent back externally towards the centre of the wheel and welded to the disc (2) so as to form the wheel embellisher.

2. Method of manufacturing a wheel according to claim 1, characterized in that a series of trapezoidal cut-outs are formed in a rectangular flat metal sheet (9) on one of its edges, in that in a first stage this metal sheet is deformed so as to obtain the profile (11) of the rim (3) and in a second stage it is deformed so as to obtain the bent back inner edge (12) of the rim (3) and to bend back the extension (5) inwardly and in that after having rolled this metal sheet and having welded it so as to form the rim on which the wheel disc (2) is welded, the extension (5) is shaped so as to obtain its final profile and is welded to the wheel disc (2).

3. Method of manufacturing a wheel according to claim 2, characterized in that a decorative pattern such as decorative cut-outs or scores (8) are formed simultaneously with the trapezoidal cut-outs (10).

FIG.2

FIG.1

FIG.7

FIG.3

FIG.4

FIG.5

FIG.6